# EUROPÄISCHE PATENTSCHRIFT

(11) **EP 4 004 287 B1**
(45) Veröffentlichungstag und Bekanntmachung des Hinweises auf die Patenterteilung: **21.06.2023**
(21) Anmeldenummer: 20735558.7
(22) Anmeldetag: 30.06.2020
(51) Int. Cl.: E01B 29/46, E01B 11/46, B23K 11/04, B23K 37/02

(54) **SCHWEISSAGGREGAT ZUM VERSCHWEISSEN VON SCHIENEN EINES GLEISES**
WELDING UNIT FOR WELDING RAILS OF A TRACK
UNITÉ DE SOUDAGE POUR LE SOUDAGE DE RAILS D'UNE VOIE

(30) Priorität: 31.07.2019 AT 2652019
(43) Veröffentlichungstag der Anmeldung: 01.06.2022
(73) Patentinhaber: Plasser & Theurer Export Von Bahnbaumaschinen Gesellschaft m.b.H., 1010 Wien (AT)
(72) Erfinder: BAUER, Andreas, 4211 Alberndorf (AT); ÖLLINGER, Markus, 3262 Wang (AT); STEINER, Ronald, 3203 Rabenstein an der Pielach (AT)
(86) Internationale Anmeldenummer: PCT/EP2020/068321
(87) Internationale Veröffentlichungsnummer: WO 2021/018497

(56) Entgegenhaltungen:
- AT-A1- 507 243
- AT-U1- 14 053
- AT-U1- 14 053

## Beschreibung

### Technisches Gebiet

Die Erfindung betrifft ein Schweißaggregat zum Verschweißen von Schienen eines Gleises, mit einem ersten Aggregatteil, der auf Aggregatführungen gegenüber einem zweiten Aggregatteil mittels Verschiebezylinder in einer Schienenlängsrichtung verschiebbar ist, wobei jeder Aggregatteil unterhalb der Aggregatführungen mit Klemmbacken gekoppelte Klemmzylinder zum Klemmen der Schienen umfasst.

### Stand der Technik

Bekannte Schweißaggregate zum Verschweißen von Schienen weisen zwei Aggregatteile auf, wobei ein Aggregatteil auf Aggregatführungen mittels Verschiebezylinder in einer Schienenlängsrichtung gegenüber dem anderen Aggregatteil verschiebbar ist. Der jeweilige Aggregatteil umfasst eine Klemmeinrichtung zum Festklemmen eines Schienenendes der zu verschweißenden Schienen. Beim Schweißvorgang werden die Aggregatteile und die darin festgeklemmten Schienenenden aufeinander zu bewegt. Eingesetzt werden gattungsgemäße Schweißaggregate auch für Schlussschweißungen unterhalb einer Normaltemperatur. Dabei müssen die Schienenenden mit hohen Zugkräften beaufschlagt werden. Entsprechend hoch ist die Anforderungen an die Aggregatführungen, die Verschiebezylinder und die Klemmeinrichtungen.

AT 006 690 U2, DE 28 01 249 A1 und WO 2010/119461 A1 offenbaren Bauformen mit zangenförmigen Aggregatteilen. Dabei umfasst jeder Aggregatteil zwei Zangenhebel, die um eine in Schienenlängsrichtung ausgerichtete Drehachse verschwenkbar sind. An unteren Hebelarmen sind Klemmbacken zum Festklemmen der Schienenenden angeordnet. Obere Hebelarme sind mit einem Klemmzylinder gekoppelt. Durch Beaufschlagung des Klemmzylinders klemmen die Klemmbacken über den Hebelmechanismus das jeweilige Schienenende. Die Verschiebezylinder sind beidseits der zu verschweißenden Schienen angeordnet. Dabei dienen die Verschiebezylinder zusätzlich mit einer in der Drehachse angeordneten Führungssäule als Aggregatführungen. Die zangenförmige Bauform der Aggregatteile bedingt, dass die Klemmzylinder oberhalb der Aggregatführungen angeordnet sind und dass Klemmkräfte die Lagerungen der Aggregatteile auf der Führungssäule beanspruchen.

Eine andere Bauform ist aus AT 507 243 A1 und AT 507 560 A4 bekannt. Hier sind drei Führungssäulen als Aggregatführungen angeordnet, wobei zumindest zwei Aggregatführungen über einen stirnseitigen Querträger verbunden sind. Ein jeweiliger Aggregatteil umfasst einen starren Grundkörper, der an seiner Unterseite einen Freiraum für ein zu klemmendes Schienenende aufweist. Klemmbacken sind direkt mit unterhalb der Aggregatführungen angeordneten Klemmzylinder gekoppelt. Somit bewirkt eine Beaufschlagung der Klemmzylinder unmittelbar eine Klemmkraft, wobei der Grundkörper die Gegenkräfte aufnimmt. Ein Verschieben des einen Aggregatteils gegenüber dem anderen Aggregatteil erfolgt über Zugstangen und Verschiebezylinder, die gegenüber dem Querträger abgestützt sind.

### Darstellung der Erfindung

Der Erfindung liegt die Aufgabe zugrunde, ein Schweißaggregat der eingangs genannten Art mit einem verbesserten Aufbau anzugeben.

Erfindungsgemäß wird diese Aufgabe gelöst durch die Merkmale des Anspruchs 1. Abhängige Ansprüche geben vorteilhafte Ausgestaltungen der Erfindung an.

Dabei sind die beiden Aggregatteile mittels der Verschiebezylinder verbunden, indem ein Zylinderkörper des jeweiligen Verschiebezylinders mit dem einen Aggregatteil verbunden ist und eine Kolbenstange des jeweiligen Verschiebezylinders mit dem anderen Aggregatteil verbunden ist. Damit entfällt die Notwendigkeit, die Verschiebzylinder gegenüber einem stirnseitigen Querträgers abzustützen. Auf diese Weise bilden die Verschiebezylindern gemeinsam mit den Klemmzylinder eine Einheit zur Übertragung von Längskräften in die zu verschweißenden Schienenenden. Wesentlich dabei ist die funktionelle Entkopplung der Aggregatführungen von der Kraftübertragung. Die Aggregatführungen übernehmen die Führungsfunktion der beiden Aggregatteile zueinander, ohne einen Beitrag zur Klemmfunktion der Klemmzylinder zu leisten. Die Aggregatführungen bleiben frei von Zug- oder Druckkräften.

In einer vorteilhaften Weiterbildung sind Längsachsen der Verschiebezylinder und Längsachsen der Klemmzylinder annähernd in einer gemeinsamen Ebene angeordnet. Das minimiert die Beanspruchungen in den Aggregatteilen, weil keine zusätzlichen Biegespannungen infolge beabstandeter Kraftachsen auftreten.

Dabei ist es von Vorteil, wenn die Klemmbacken in der Weise angeordnet sind, dass die zu verschweißenden Schienen mit einer in der gemeinsamen Ebene liegenden Neutralachse festklemmbar sind. Auf diese Weise wirken die Verschiebekräfte in einer Ebene mit der Neutralachse der Schienen, sodass die Aggregatteile und die Aggregatführungen keine Kippmomente aufnehmen müssen. Auf die Aggregatführungen wirken lediglich Gewichtskräfte der Aggregatteile und der während eines Schweißvorgangs festgeklemmten und angehobenen Schienenenden.

Eine Weiterbildung der Erfindung sieht vor, dass jeder Aggregatteil unterhalb der Aggregatführungen einen Klemmkörper umfasst, in dem nebeneinander mehrere Klemmzylinder integriert sind. Damit wird eine kompakte Bauweise des jeweiligen Aggregatteils erreicht, wobei eine ausreichend hohe resultierende Gesamtklemmkraft zur Verfügung steht.

Eine kompakte Bauweise des gesamten Schweißaggregats wird begünstigt, wenn die Verschiebezylinder an seitlichen Außenflächen der Aggregatteile angeflanscht sind. Auf diese Weise ist die Anordnung der Verschiebezylinder konstruktiv entkoppelt von den Aggregatteilen und den Klemmzylindern. Das erleichtert die Auslegung des Schweißaggregats, wobei durch Anordnung unterschiedlicher Verschiebezylinder die erreichbaren Verschiebekräfte variierbar sind. Resultat ist ein Baukastensystem, bei dem baugleiche Aggregatteile für Schweißaggregate unterschiedlicher Leistung verwendbar sind.

Bei der Ausgestaltung der Führungen ist es von Vorteil, wenn als Führungssystem drei insbesondere als Gleitrohre ausgebildete Aggregatführungen versetzt zueinander angeordnet sind. Damit ist ein Optimum zwischen Gewicht und Stabilität des Führungssystems erzielbar.

Günstigerweise sind zwei äußere Aggregatführungen nebeneinander angeordnet und eine mittlere Aggregatführung ist nach oben versetzten angeordnet. Die aufzunehmenden Kräfte verteilen sich dabei weitgehend gleichmäßig auf die drei Aggregatführungen.

Die Stabilität des Führungssystems wird weiter erhöht, wenn der erste Aggregatteil zwischen dem zweiten Aggregatteil und einem Querverbindungsteil angeordnet ist und wenn die Aggregatführungen einerseits starr mit dem zweiten Aggregatteil und andererseits starr mit dem Querverbindungsteil verbunden sind. Der Querverbindungsteil ist dabei lediglich eine Komponente des Führungssystems und überträgt keine Verschiebe- oder Klemmkräfte.

Eine weitere Verbesserung des Aufbaus sieht vor, dass jeder Aggregatteil einen baugleichen Grundkörper umfasst. Erreicht wird diese vorteilhafte Ausgestaltung durch die Entkopplung des Führungssystems und der Verschiebezylinder.

Dabei ist es günstig, wenn der jeweilige Grundkörper an beiden Längsseiten nebeneinander mehrere Verbindungsstellen zum Anflanschen unterschiedlich langer Verschiebezylinder aufweist. Auf diese Weise ist die Anbringung der Verschiebezylinder in einfacher Weise variierbar. Schweißaggregate unterschiedlicher Leistung sind dabei durch einen Tausch der Verschiebezylinder realisierbar.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Schweißaggregat in einer Seitenansicht
- Fig. 2: Schweißaggregat in einer Vorderansicht
- Fig. 3: Schweißaggregat in einer ersten Schrägansicht
- Fig. 4: Schweißaggregat in einer zweiten Schrägansicht

### Beschreibung der Ausführungsformen

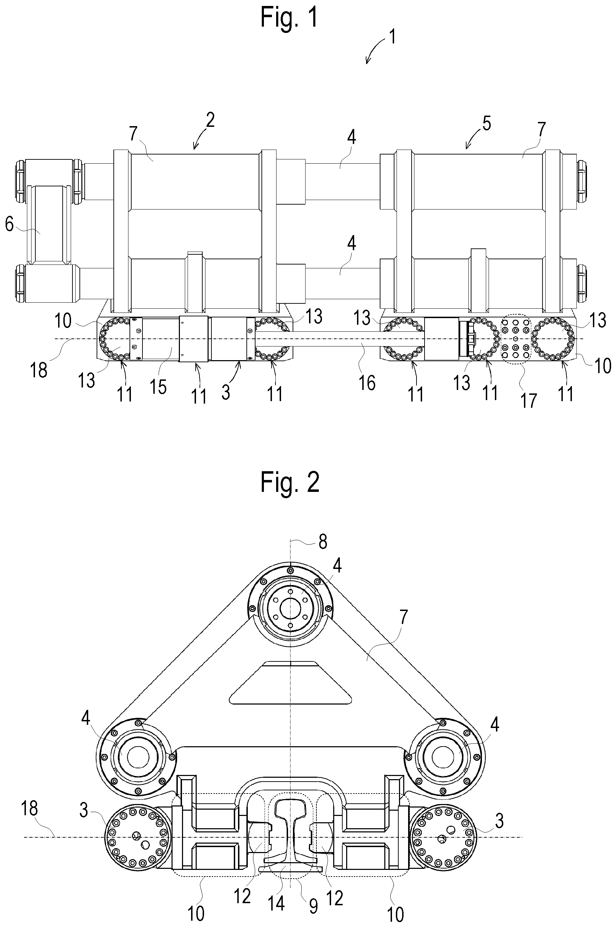

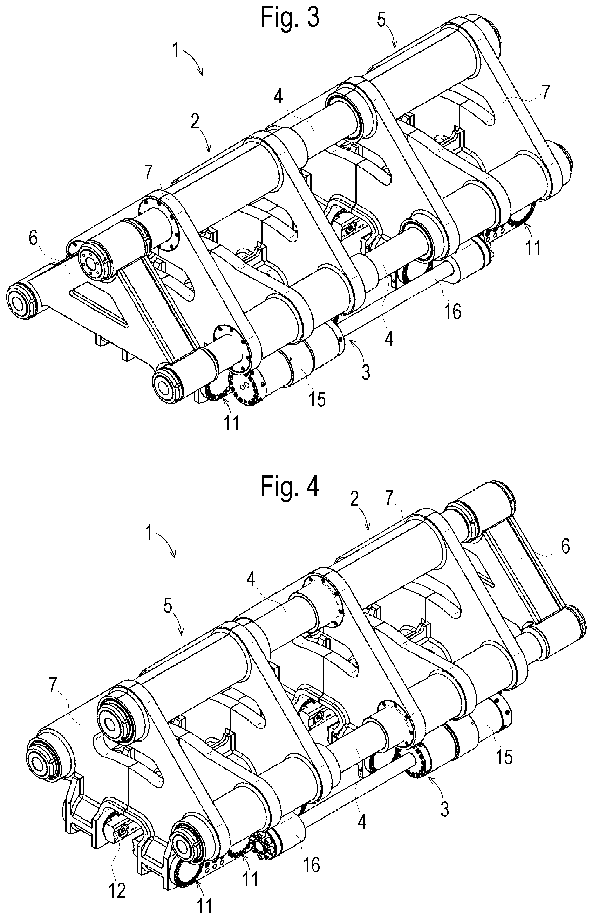

Bei dem in den Figuren 1 bis 4 dargestelltem Schweißaggregat 1 ist ein erster Aggregatteil 2 mittels Verschiebezylinder 3 entlang von Aggregatführungen 4 gegenüber einem zweiten Aggregatteil 5 verschiebbar. Die im Querschnitt an Eckpunkten eines gleichschenkeligen Dreiecks angeordneten Aggregatführungen 4 sind endseitig starr mi einem Querverbindungsteil 6 verbunden. Auf der gegenüberliegenden Seite des Querverbindungsteils 6 sind die Aggregatführungen 4 starr mit dem zweiten Aggregatteil 5 verbunden. Dazwischen ist der verschiebbare erste Aggregatteil 2 angeordnet. Auf diese Weise bilden die Aggregatführungen 4 mit den endseitigen Verbindungen ein starres Führungssystem.

Jeder Aggregatteil 2, 5 umfasst einen baugleichen Grundkörper 7, der beispielsweise als Schweißkonstruktion ausgeführt ist. In der dargestellten Ausprägung umfassen die Aggregatführungen 4 drei Gleitrohre. Zwei untere Gleitrohre sind symmetrisch bezüglich einer vertikalen Symmetriefläche 8 angeordnet. Ein oberes Gleitrohr ist mittig darüber angeordnet, sodass die Längsachse des Gleitrohr in der Symmetriefläche 8 liegt. Im Grundkörper 7 des ersten Aggregatteils 2 sind Gleitbuchsen angeordnet, die auf den Gleitrohren gleiten. Im Grundkörper 7 des zweiten Aggregatteils 5 sind die Gleitrohre festgeklemmt.

Unterhalb der Aggregatführungen 4 umfasst jeder Aggregatteil 2, 5 beidseits eines Freiraums 9 einen jeweiligen Klemmkörper 10. Im jeweiligen Klemmkörper 10 sind nebeneinander drei Innenzylinder angeordnet, in welchen Kolben mit Kolbenstangen geführt sind. Auf diese Weise umfasst jeder Klemmkörper 10 drei hydraulisch gekoppelte Klemmzylinder 11, deren Kolbenstangen endseitig mit einer gemeinsamen Klemmbacke 12 verbunden sind. An den äußeren Flächen des jeweiligen Klemmkörpers 10 sind die Klemmzylinder 11 mittels Zylinderdeckel 13 verschlossen.

Im Freiraum 9 zwischen den Klemmkörpern 10 werden zu verschweißende Schienen 14 aufgenommen und festgeklemmt. Konkret erfolgt im Betrieb eine hydraulische Beaufschlagung der Klemmzylinder 11, wodurch die Klemmbacken 12 an die miteinander zu verschweißenden Schienen 14 angepresst werden.

Die Verschiebezylinder 3 sind beidseits an seitlichen Außenflächen der Aggregatteile 2, 5 angeflanscht. Dabei ist ein Zylinderkörper 15 des jeweiligen Verschiebezylinders 3 mit dem einen Aggregatteil 2 und eine Kolbenstange 16 mit dem anderen Aggregatteil 5 verbunden. Günstigerweise sind Verbindungsstellen 17 für die Verschiebezylinder 3 im Bereich zwischen zwei Klemmzylindern 11 des jeweiligen Klemmkörpers 10 angeordnet. Auf diese Weise sind Längsachsen der Verschiebezylinder 3 und Längsachsen der Klemmzylinder 11 annähernd in einer gemeinsamen Ebene 18 angeordnet. Ziel ist die Vermeidung von Biegemomenten durch vertikal beabstandete Kraftachsen.

Für die Nutzung unterschiedlich langer Verschiebezylinder 3 ist es sinnvoll, wenn jeder Klemmkörper 10 zwei Verbindungsstellen 17 zwischen den drei Klemmzylindern 11 aufweist. Zum Aufbringen größerer Verschiebekräfte sind dann an den am weitesten voneinander entfernten Verbindungsstellen 17 längere Verschiebezylinder 3 mit mehreren Druckkammern anflanschbar.

Durch die konstruktive Trennung der Verschiebezylinderanordnung und des Führungssystems werden bei einem Schweißvorgang keine Zugkräfte in das Führungssystem eingeleitet. Auf das Führungssystem wirken lediglich die Gewichtskraft des Schweißaggregats und der zu verschweißenden Schienen 14 sowie Schienenspannungskräfte in vertikaler Richtung.

Zwischen den beiden Aggregatteilen 2, 5 ist eine Abschervorrichtung zur Entfernung eines Schweißwulstes vorgesehen. An jeder äußeren Stirnfläche der beiden Aggregatteile 2, 5 ist eine Hebevorrichtung zum Anheben der Schienen befestigt.

Zur Vorbereitung des Schweißvorganges werden beide Schienen 14 durch die Hebevorrichtungen von den darunterliegenden Schwellen abgehoben und gegen Anschlagelemente gepresst. Anschließend werden die Klemmzylinder 11 beaufschlagt, um die Klemmbacken mit einer hohen Klemmkraft (z.B. 1600 kN) an einen Schienensteg der jeweiligen Schiene 14 anzupressen. Die Klemmbacken 12 sind mit einem sekundären Stromkreis des Schweißaggregats 1 verbunden und bewirken eine Stromübertragung auf die Schienen 14. Alternativ dazu können auch separate elektrische Elektroden an die Schienen 14 gepresst werden.

Zur Einleitung des Schweißvorganges werden die Aggregatteile 2, 5 mitsamt den erfassten Schienen 14 durch Beaufschlagung der Verschiebeantriebe 3 mit einer Zugkraft aufeinander zubewegt. Bei einer sogenannten Schlussschweißung werden dabei bis zu 1500 kN erreicht. Sobald die für die Schweißung erforderliche Distanzierung der beiden Schienenenden erreicht ist, wird die Stromzufuhr eingeleitet.

Im Fall einer über der Neutraltemperatur liegenden Umgebungstemperatur ist es bei einer Schlussschweißung auch möglich, die Schienen 14 - durch entsprechende Beaufschlagung der beiden Verschiebeantriebe 3 - zunächst auseinander zu bewegen, um einen Schweißspalt herzustellen.

## Patentansprüche

1. Schweißaggregat (1) zum Verschweißen von Schienen (14) eines Gleises, mit einem ersten Aggregatteil (2), der auf Aggregatführungen (4) gegenüber einem zweiten Aggregatteil (5) mittels Verschiebezylinder (3) in einer Schienenlängsrichtung verschiebbar ist, wobei jeder Aggregatteil (2, 5) unterhalb der Aggregatführungen (4) mit Klemmbacken (12) gekoppelte Klemmzylinder (11) zum Klemmen der Schienen (14) umfasst, **dadurch gekennzeichnet, dass** die beiden Aggregatteile (2, 5) mittels der Verschiebezylinder (3) verbunden sind, indem ein Zylinderkörper (15) des jeweiligen Verschiebezylinders (3) mit dem einen Aggregatteil (2 oder 5) verbunden ist und eine Kolbenstange (16) des jeweiligen Verschiebezylinders (3) mit dem anderen Aggregatteil (5 oder 2) verbunden ist.

2. Schweißaggregat (1) nach Anspruch 1, **dadurch gekennzeichnet, dass** Längsachsen der Verschiebezylinder (3) und Längsachsen der Klemmzylinder (11) annähernd in einer gemeinsamen Ebene (18) angeordnet sind.

3. Schweißaggregat (1) nach Anspruch 2, **dadurch gekennzeichnet, dass** die Klemmbacken (12) in der Weise angeordnet sind, dass die zu verschweißenden Schienen (14) mit einer in der gemeinsamen Ebene (18) liegenden Neutralachse festklemmbar sind.

4. Schweißaggregat (1) nach einem der Ansprüche 1 bis 3, **dadurch gekennzeichnet, dass** jeder Aggregatteil (2, 5) unterhalb der Aggregatführungen (4) einen Klemmkörper (10) umfasst, in dem nebeneinander mehrere Klemmzylinder (11) integriert sind.

5. Schweißaggregat (1) nach einem der Ansprüche 1 bis 4, **dadurch gekennzeichnet, dass** die Verschiebezylinder (3) an seitlichen Außenflächen der Aggregatteile (2, 5) angeflanscht sind.

6. Schweißaggregat (1) nach einem der Ansprüche 1 bis 5, **dadurch gekennzeichnet, dass** drei insbesondere als Gleitrohre ausgebildete Aggregatführungen (4) versetzt zueinander angeordnet sind.

7. Schweißaggregat (1) nach Anspruch 6, **dadurch gekennzeichnet, dass** zwei äußere Aggregatführungen (4) nebeneinander angeordnet sind und dass eine mittlere Aggregatführung (4) nach oben versetzten angeordnet ist.

8. Schweißaggregat (1) nach einem der Ansprüche 1 bis 7, **dadurch gekennzeichnet, dass** der erste Aggregatteil (2) zwischen dem zweiten Aggregatteil (5) und einem Querverbindungsteil (6) angeordnet ist und dass die Aggregatführungen (4) einerseits starr mit dem zweiten Aggregatteil (5) und andererseits starr mit dem Querverbindungsteil (6) verbunden sind.

9. Schweißaggregat (1) nach einem der Ansprüche 1 bis 8, **dadurch gekennzeichnet, dass** jeder Aggregatteil (2, 5) einen baugleichen Grundkörper (7) umfasst.

10. Schweißaggregat (1) nach Anspruch 9, **dadurch gekennzeichnet, dass** der jeweilige Grundkörper (7) an beiden Längsseiten nebeneinander mehrere Verbindungsstellen (17) zum Anflanschen unterschiedlich langer Verschiebezylinder (3) aufweist.

## Claims

1. Welding unit (1) for welding rails (14) of a track, including a first sub-unit (2) which is displaceable on unit guides (4) in a rail longitudinal direction relative to a second sub-unit (5) by means of displacement cylinders (3), wherein each sub-unit (2, 5) comprises clamping cylinders (11) that are arranged underneath the unit guides (4) and coupled to clamping jaws (12) for clamping the rails (14), **characterized in that** the two sub-units (2, 5) are connected by means of the displacement cylinders (3) **in that** a cylinder body (15) of the respective displacement cylinder (3) is connected to the one sub-unit (2 or 5) and a piston rod (16) of the respective displacement cylinder (3) is connected to the other sub-unit (2 or 5).

2. Welding unit (1) according to claim 1, **characterized in that** longitudinal axes of the displacement cylinders (3) and longitudinal axes of the clamping cylinders (11) are arranged approximately in a common plane (18).

3. Welding unit (1) according to claim 2, **characterized in that** the clamping jaws (12) are arranged in such a way that the rails (14) to be welded can be clamped with a neutral axis lying in the common plane (18).

4. Welding unit (1) according to one of claims 1 to 3, **characterized in that**, underneath the unit guides (4), each sub-unit (2, 5) has a clamping body (10) into which several clamping cylinders (11) are integrated side by side.

5. Welding unit (1) according to one of claims 1 to 4, **characterized in that** the displacement cylinders (3) are flange-mounted to lateral outer surfaces of the sub-units (2, 5).

6. Welding unit (1) according to one of claims 1 to 5, **characterized in that** three unit guides (4), designed in particular as sliding tubes, are arranged offset to one another.

7. Welding unit (1) according to claim 6, **characterized in that** two outer unit guides (4) are arranged side by side, and that a central unit guide (4) is arranged upwardly offset.

8. Welding unit (1) according to one of claims 1 to 7, **characterized in that** the first sub-unit (2) is arranged between the second sub-unit (5) and a transverse connecting part (6), and that the unit guides (4) are rigidly connected, on the one hand, to the second sub-unit (5) and, on the other hand, to the transverse connecting part (6).

9. Welding unit (1) according to one of claims 1 to 8, **characterized in that** each sub-unit (2, 5) has a structurally identical basic body (7).

10. Welding unit (1) according to claim 9, **characterized in that** the respective basic body (7) has several connecting points (17) side by side at both longitudinal sides for flange-mounting displacement cylinders (3) of different length.

## Revendications

1. Module de soudure (1) pour la soudure de rails (14) d'une voie ferrée, avec une première partie de module (2) qui peut être coulissée sur des guides de module (4) en face d'une seconde partie de module (5) au moyen de cylindres de coulissement (3) dans une direction longitudinale de rail, dans lequel chaque partie de module (2, 5) comprend des cylindres de serrage (11) couplés à des mâchoires de serrage (12) en dessous des guides de module (4) pour le serrage des rails (14), **caractérisé en ce que** les deux parties de module (2, 5) sont connectées au moyen des cylindres de coulissement (3) **en ce qu'**un corps de cylindre (15) du cylindre de coulissement respectif (3) est connecté à la partie de module en question (2 ou 5) et une tige de piston (16) du cylindre de coulissement respectif (3) est connectée à l'autre partie de module (5 ou 2).

2. Module de soudure (1) selon la revendication 1, **caractérisé en ce que** des axes longitudinaux des cylindres de coulissement (3) et des axes longitudinaux des cylindres de serrage (11) sont disposés approximativement dans un plan commun (18).

3. Module de soudure (1) selon la revendication 2, **caractérisé en ce que** les mâchoires de serrage (12) sont disposées de telle sorte que les rails à souder (14) peuvent être bloqués avec un axe neutre situé dans le plan commun (18).

4. Module de soudure (1) selon une des revendications 1 à 3, **caractérisé en ce que** chaque partie de module (2, 5) comprend un corps de serrage (10) en dessous des guides de module (4) dans lequel plusieurs cylindres de serrage (11) sont intégrés côte à côte.

5. Module de soudure (1) selon une des revendications 1 à 4, **caractérisé en ce que** les cylindres de coulissement (3) sont bridés à des faces externes latérales des parties de module (2, 5).

6. Module de soudure (1) selon une des revendications 1 à 5, **caractérisé en ce que** trois guides de module (4) réalisés notamment en tant que tubes coulissants sont disposés de manière décalée l'un par rapport à l'autre.

7. Module de soudure (1) selon la revendication 6, **caractérisé en ce que** deux guides de module extérieurs (4) sont disposés côte à côte et qu'un guide de module central (4) est disposé de manière décalée vers le haut.

8. Module de soudure (1) selon une des revendications 1 à 7, **caractérisé en ce que** la première partie de module (2) est disposée entre la seconde partie de module (5) et une partie de connexion transversale (6), et que les guides de module (4) sont connectés d'un côté de manière fixe à la seconde partie de module (5) et de l'autre côté de manière fixe à la partie de connexion transversale (6).

9. Module de soudure (1) selon une des revendications 1 à 8, **caractérisé en ce que** chaque partie de module (2, 5) comprend un corps de base identique (7).

10. Module de soudure (1) selon la revendication 9, **caractérisé en ce que** le corps de base respectif (7) présente sur les deux côtés longitudinaux plusieurs points de connexion (17) côte à côte pour le bridage de cylindres de coulissement (3) de longueur différente.
